# EUROPEAN PATENT APPLICATION

(11) **EP 4 535 034 A1**
(43) Date of publication of application: **09.04.2025**
(21) Application number: 23202209.5
(22) Date of filing: 06.10.2023
(51) Int. Cl.: G01S 13/34, G01S 13/58, G01S 13/931

(54) **A VEHICLE RADAR SYSTEM**

(71) Applicant: Magna Electronics Sweden AB, 447 37 Vårgårda (SE)
(72) Inventor: Marsch, Sebastian, 97464 Niederwerrn (DE); Klotzbuecher, Dirk, 97464 Niederwerrn (DE)
(74) Representative: Westpatent AB

(57) **Abstract**

The present disclosure relates to a vehicle radar system (101) comprising a control unit (130) and a transceiver unit (110) with a plurality of transmitter antenna arrangements (210a, 210b, 210c, 210d) and a transmitter unit (208) arranged to generate FMCW radar waveforms (204a, 204b, 204c, 204d) with successive radar signal ramps (r). The transmitter unit (208) is adapted to feed each one of at least two transmitter antenna arrangements (210a, 210b, 204c, 204d) with a corresponding radar waveform (204a, 204b, 204c, 204d), For each one of the least two transmitter antenna arrangements (210a, 210b, 210c, 210d), the transmitter unit (208) is adapted to generate adjacent sequences (241, 242; 243, 244; 245, 246; 247, 248) of radar signal ramps (r) with a different phase shift increment (Δω₁, Δω₂; Δω₃, Δω₄; Δω₅, Δω₆; Δω₇, Δω₈) such that an artificial Doppler modulation is inflicted to each sequence (241, 242; 243, 244; 245, 246; 247, 248) of radar signal ramps (r).

## Description

The present disclosure relates to a vehicle radar system comprising a control unit, a plurality of transmitter antenna arrangements and a transceiver unit that in turn comprises a transmitter unit arranged to generate FMCW, Frequency Modulated Continuous Wave, radar waveforms. Each radar waveform comprises at least two corresponding successive sequences of radar signal ramps, and, where the transmitter unit is adapted to feed each one of at least two transmitter antenna arrangements with a corresponding radar waveform.

A radar system comprises means for generating radar signals that are transmitted, reflected and received by means of appropriate antennas comprised in the radar system. The signal may comprise so-called chirp ramps in an FMCW (Frequency Modulated Continuous Wave) signal with a certain amplitude where the frequency is continuously ramped between two values, the chirp signal thus being in the form of a continuous sinusoid where the frequency varies from a first low frequency to a second high frequency over the course of the ramp.

Such a radar system may be in the form of a multiple-input multiple-output (MIMO) radar as disclosed in the document US 2011140949 which describes a MIMO radar where a transmitter transmits FMCW signals and a receiver receives echo signals which are mixed with the transmitted signal. The mixed signal is then converted into a digital signal.

MIMO enables transmitting with several transmitters simultaneously and extract the signal from every transmitter after receiving. One common technique to do this for an FMCW signal is DDMA (Doppler Division Multiple Access). This technique uses a programmable phase shifter for every transmitter to modulate an artificial Doppler frequency to every transmitted signal. As no two transmitters use the same modulated artificial Doppler frequency, every transmitter is seen on a different location in the Doppler spectrum. DDMA requires the modulated Doppler frequencies to be known to detected signals in the Doppler spectrum to specific transmitters.

If there are two or more objects that are not resolved by the range FFT and have different relative velocities and thus different Doppler frequencies, one artificial Doppler-modulated transmit signal of one object can collide with one artificial Doppler-modulated transmit signal of another object. If this happens, a subset of the received signals is contaminated by signals of another object and thus will introduce errors in subsequent processing steps, e.g. bearing processing. Usually frame rates, i.e., time from one FMCW pulse to the next, of radar devices are so small that the environmental situation is nearly constant across subsequent FMCW pulses and thus the collision will be existing over subsequent frames. This leads to the same errors in following processing steps over subsequent frames.

The object of the present disclosure is to provide a vehicle radar system which is arranged to counteract the above problem.

This object is obtained by means of a vehicle radar system comprising a control unit and a transceiver unit that in turn comprises a plurality of transmitter antenna arrangements and a transmitter unit arranged to generate FMCW, Frequency Modulated Continuous Wave, radar waveforms. Each radar waveform comprises at least two corresponding successive sequences of radar signal ramps, and the transmitter unit is adapted to feed each one of at least two transmitter antenna arrangements with a corresponding radar waveform. For each one of the least two transmitter antenna arrangements, the transmitter unit is adapted to generate adjacent sequences of radar signal ramps with a different phase shift increment such that an artificial Doppler modulation is inflicted to each sequence of radar signal ramps.

This means that the probability of detections for different target objects that coincide at the same Doppler bin to such an extent that the two detections cannot be distinguished from each other is lowered.

According to some aspects, the transmitter unit comprises a signal generator and a phase shifter, where the signal generator is connected to the phase shifter that in turn is connected to the transmitter antenna arrangements. The phase shifter is a programmable phase shifter that is adapted to modulate an artificial Doppler frequency to the FMCW radar waveforms.

This provides an accurate and easily controllable phase shift.

According to some aspects, the transceiver unit further comprises a receiver unit and a plurality of receiver antenna arrangements that are adapted to receive signals that have been reflected by one or more target objects.

According to some aspects, the control unit comprises a Digital Signal Processor, DSP, arrangement that is adapted to process digital signals input from the receiver unit. According to some further aspects, the control unit is adapted to distinguish between received signals that are associated with different detected target objects in the Doppler spectrum by finding patterns of signals caused by the artificial Doppler modulation.

This means that well-known FDMM techniques can be applied to resolve the targets objects.

According to some aspects, the receiver unit is arranged to convert mixed received signals to digital signals.

According to some aspects, the control unit is adapted to control the signal generator, the phase shifter and the receiver unit. This means that these devices are controlled in an efficient and centralized manner.

According to some aspects, the control unit is adapted to control the phase shifter such that each phase shift increment is changed between adjacent transmitted sequences of radar signal ramps in a stochastic manner. This contributes to distributing the detections over time, enabling a more accurate detection of the target objects.

This object is also obtained by means of methods and vehicles that are associated with the above advantages.

### BRIEF DESCRIPTION OF THE DRAWINGS

The present disclosure will now be described more in detail with reference to the appended drawings, where:
- Figure 1: shows a schematic top view of a vehicle;
- Figure 2: schematically illustrates a simplified schematic of a vehicle radar system;
- Figure 3A: schematically illustrates a graphic representation of a first FMCW radar waveform;
- Figure 3B: schematically illustrates a graphic representation of a second FMCW radar waveform;
- Figure 3C: schematically illustrates a graphic representation of a third FMCW radar waveform;
- Figure 3D: schematically illustrates a graphic representation of a fourth FMCW radar waveform;
- Figure 4A: schematically illustrates a first graphic representation of spectral magnitude as a function of Doppler spectral bin for detections of a first object;
- Figure 4B: schematically illustrates a first graphic representation of spectral magnitude as a function of Doppler spectral bin for detections of a second object;
- Figure 4C: schematically illustrates a combination of the detections in Figure 4A and Figure 4B;
- Figure 5A: schematically illustrates a second graphic representation of spectral magnitude as a function of Doppler spectral bin for detections of a first object;
- Figure 5B: schematically illustrates a second graphic representation of spectral magnitude as a function of Doppler spectral bin for detections of a second object;
- Figure 5C: schematically illustrates a combination of the detections in Figure 5A and Figure 5B;
- Figure 6: schematically illustrates a control unit;
- Figure 7: schematically illustrates a computer program product; and
- Figure 8: shows a flowchart for a method according to the present disclosure.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

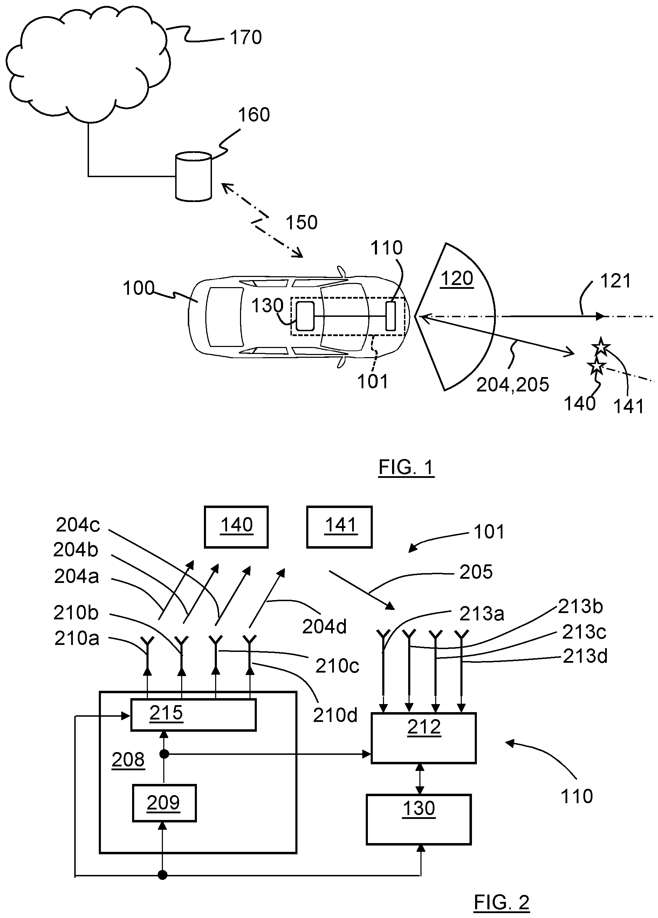

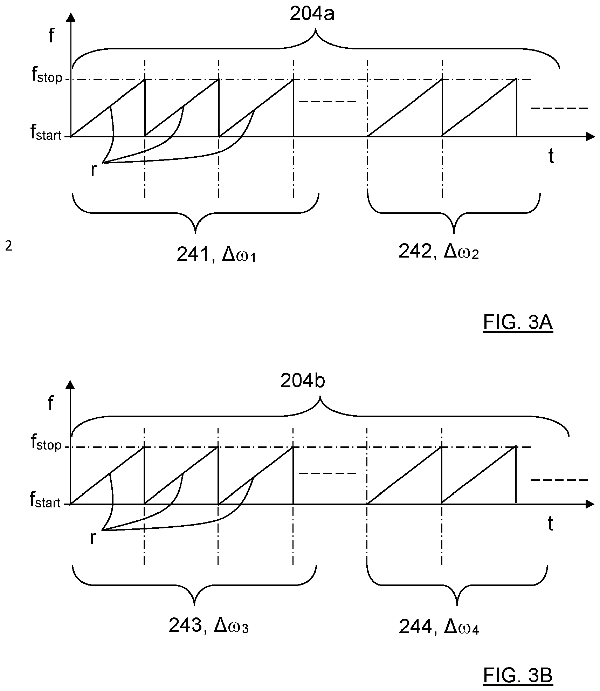

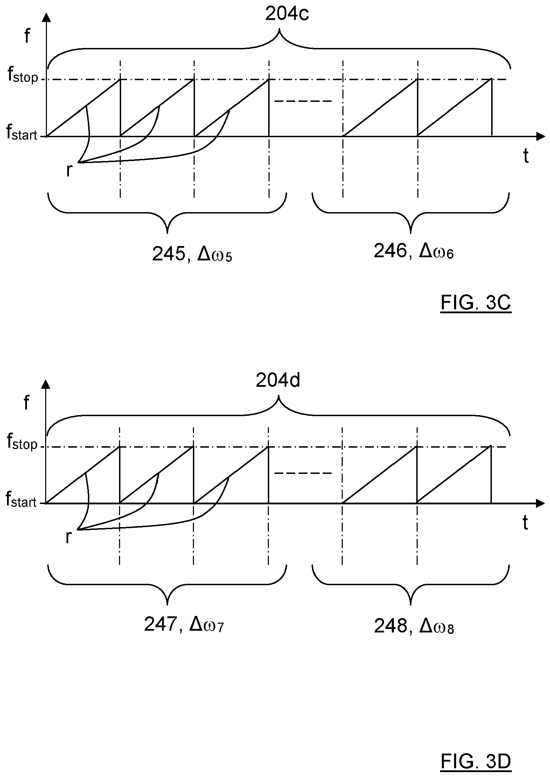

Figure 1 shows a vehicle 100 equipped with a vehicle radar system 101. The vehicle radar system 101 comprises a control unit 130 and a transceiver unit 110 that in turn comprises a plurality of transmitter antenna arrangements 210a, 210b, 210c, 210d. With reference also to Figure 2 and Figure 3A-3D, the transceiver unit 110 in turn comprises a transmitter unit 208 arranged to generate radar waveforms in the form of FMCW, Frequency Modulated Continuous Wave, radar waveforms 204a, 204b, 204b, 204c, 204d, where each radar waveform 204a, 204b, 204c, 204d comprises at least two corresponding successive sequences 241, 242; 243, 244; 245, 246; 247, 248 of radar signal ramps r.

The transmitter unit 208 is adapted to feed each one of at least two transmitter antenna arrangements 210a, 210b, 210c, 210d with a corresponding radar waveform 204a, 204b, 204c, 204d.

The vehicle radar system 101 may be comprised in a single physical unit or they may be distributed over more than one physical unit. Some parts of the radar system functionality may even be comprised in a remote server 160 or cloud-based resource 170 connected to the vehicle 100 via wireless link 150.

According to some aspects, the transceiver unit 110 further comprises a receiver unit 212 and a plurality of receiver antenna arrangements 213a, 213b, 213c, 213d that are adapted to receive signals 205 that have been reflected by one or more target objects 140, 141. The vehicle radar system 101 is according to some aspects arranged for generating and transmitting radar signals in the form of FMCW signals 204a-204d, sometimes also referred to as radar chirp signals, and to receive reflected radar signals 205, where the transmitted signals have been reflected by target objects 140, 141.

The vehicle radar system 101 is associated with a field of view 120. In case of a front vehicle radar system, a boresight direction 121 of the radar often coincides with a center line of the field of view 120 in a forward direction of the vehicle 100. In case the vehicle radar system 101 instead, or also, is configured as a side radar or rear corner radar, then a boresight direction may point in some other angle compared to the forward direction of the vehicle 100.

As noted above, the vehicle radar system 101 may be connected via wireless link 150 to a remote server 160, which in turn may be comprised in a cloud-based resource 170 or remote network. This server and network may be configured to assist the vehicle 100 in performing various operations such as radar signal processing, interference mitigation, beamforming, and the like.

According to the present disclosure, for each one of the least two transmitter antenna arrangements 210a, 210b, 210c, 210d, the transmitter unit 208 is adapted to generate adjacent sequences 241, 242; 243, 244; 245, 246; 247, 248 of radar signal ramps r with a different phase shift increment Δω₁, Δω₂; Δω₃, Δω₄; Δω₅, Δω₆; Δω₇, Δω₈ such that an artificial Doppler modulation is inflicted to each sequence 241, 242; 243, 244; 245, 246; 247, 248 of radar signal ramps r.

This means that the probability of detections for different target objects that coincide at the same Doppler bin to such an extent that the two detections cannot be distinguished from each other is lowered.

In an example illustrated in Figure 2 and Figure 3A-Figure 3D, there are four transmitter antenna arrangements 210a, 210b, 210c, 210d, where a first transmitter antenna arrangement 210a is adapted to transmit a first radar waveform 204a that comprises a first sequence 241 of radar signal ramps r where there is a first phase increment ΔΔω₁ between successive ramps r, and a second sequence 242 of radar signal ramps r where there is a second phase increment ΔΔω₂ between successive ramps r. The first phase increment ΔΔω₁ differs from the second phase increment ΔΔω₂.

In a corresponding manner, a second transmitter antenna arrangement 210b is adapted to transmit a second radar waveform 204b that comprises a third sequence 243 of radar signal ramps r where there is a third phase increment Δω₃ between successive ramps r, and a fourth sequence 244 of radar signal ramps r where there is a fourth phase increment Δω₄ between successive ramps r. The third phase increment Δω₃ differs from the fourth phase increment Δω₄.

In a corresponding manner, a third transmitter antenna arrangement 210c is adapted to transmit a third radar waveform 204c that comprises a fifth sequence 245 of radar signal ramps r where there is a fifth phase increment Δω₅ between successive ramps r, and a sixth sequence 246 of radar signal ramps r where there is a sixth phase increment Δω₆ between successive ramps r. The fifth phase increment Δω₅ differs from the sixth phase increment Δω₆.

In a corresponding manner, a fourth transmitter antenna arrangement 210d is adapted to transmit a fourth radar waveform 204d that comprises a seventh sequence 247 of radar signal ramps r where there is a seventh phase increment Δω₇ between successive ramps r, and an eighth sequence 248 of radar signal ramps r where there is an eighth phase increment Δω₈ between successive ramps r. The seventh phase increment Δω₇ differs from the eighth phase increment Δω₈.

According to some aspects, this means that the control unit 130 is adapted to change one set of artificial Doppler modulation frequencies for the transmitter antenna arrangements 210a, 210b, 210c, 210d to another set of Doppler modulation frequencies for the transmitter antenna arrangements 210a, 210b, 210c, 210d in the adjacent sequences 241, 242; 243, 244; 245, 246; 247, 248 of radar signal ramps r.

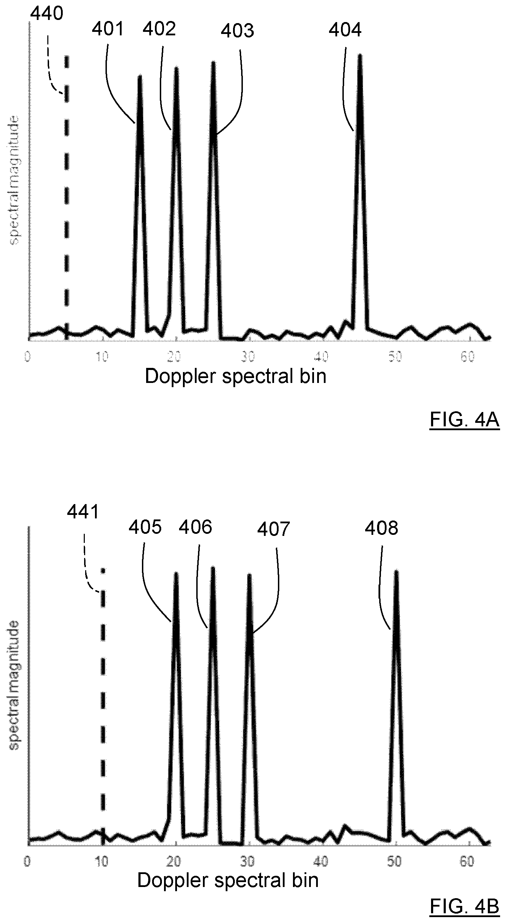

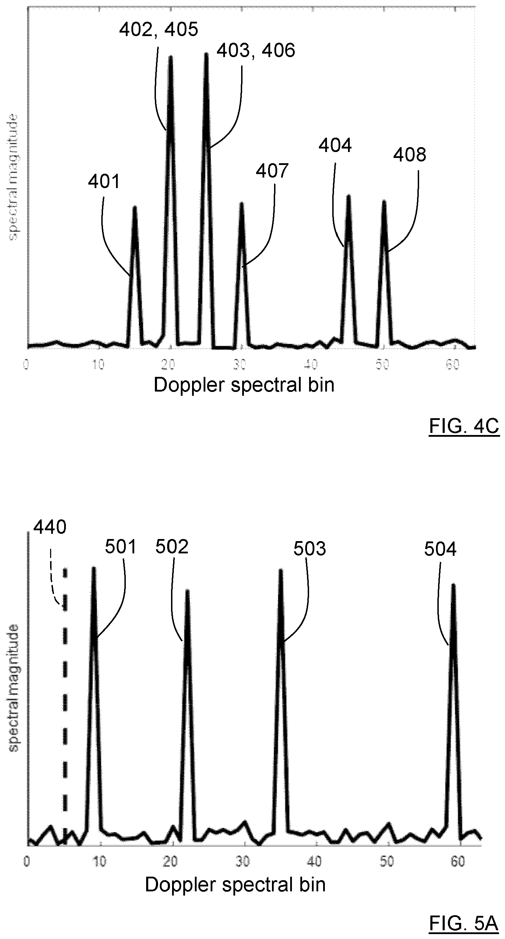

The practical technical effect that is achieved by means of the present disclosure will now be discussed with reference to Figure 4A-Figure 4C and Figure 5A-Figure 5C that shows spectral magnitude as a function of Doppler frequency or Doppler spectral bin.

Figure 4A-Figure 4C disclose a situation where two separate target objects 140, 141, as indicated in Figure 1 and Figure 2, are detected using the first sequence 241 of radar signal ramps r, the third sequence 243 of radar signal ramps r, the fifth sequence 245 of radar signal ramps r and the seventh sequence 247 of radar signal ramps r, where these sequences 241, 243, 245, 247 of radar signal ramps r are transmitted more or less simultaneously.

In Figure 4A, a first target object 140 that actually is present in Doppler bin 5 is indicated with a dotted line 440, and the corresponding received detections 401, 402, 403, 404 are indicated with solid lines. A first received detection 401, approximately at Doppler bin 15, corresponds to the first sequence 241 of radar signal ramps r, and a second received detection 402, approximately at Doppler bin 20, corresponds to the third sequence 243 of radar signal ramps r. Furthermore, a third received detection 403, approximately at Doppler bin 25, corresponds to the fifth sequence 245 of radar signal ramps r, and a fourth received detection 404, approximately at Doppler bin 45, corresponds to the seventh sequence 247 of radar signal ramps r.

In Figure 4B, a second target object 141 that actually is present in Doppler bin 10 is indicated with a dotted line 441, and the corresponding received detections 405, 406, 407, 408 are indicated with solid lines. A fifth received detection 405, approximately at Doppler bin 20, corresponds to the first sequence 241 of radar signal ramps r, and a sixth received detection 406, approximately at Doppler bin 25, corresponds to the third sequence 243 of radar signal ramps r. Furthermore, a seventh received detection 407, approximately at Doppler bin 30, corresponds to the fifth sequence 245 of radar signal ramps r, and an eighth received detection 408, approximately at Doppler bin 50, corresponds to the seventh sequence 247 of radar signal ramps r.

In Figure 4C the resulting received detections for the two target objects 140, 141 are shown for the first sequence 241 of radar signal ramps r, the third sequence 243 of radar signal ramps r, the fifth sequence 245 of radar signal ramps r and the seventh sequence 247 of radar signal ramps r.

According to some aspects, the vehicle radar system 101 is adapted for DDMA, Doppler Division Multiple Access, applying an artificial Doppler frequency to every transmitted signal. As no transmitters use the same modulated artificial Doppler frequency, every transmitter antenna arrangement is seen on a different location in the Doppler spectrum. DDMA requires the modulated Doppler frequencies to be known to detected signals in the Doppler spectrum to specific transmitter antenna arrangements.

The above is a typical result of such a radar system according to prior art. Here, two detections for the target object 141 collide at more or less the same Doppler bin such that they are not possible to distinguish from each other. When there are two or more target objects that are not resolved by the range FFT and have different relative velocities and thus different Doppler frequencies, one artificial Doppler-modulated transmit signal of one target object can collide with one artificial Doppler-modulated transmit signal of another target object. If this happens, a subset of the received signals is contaminated by signals of another object and thus will introduce errors in subsequent processing steps, e.g. bearing processing.

More in detail, in this example the second received detection 402 that relates to the first target object 441 and the fifth received detection 405 that relates to the second target object 441 coincide at the same Doppler bin to such an extent that the two detections 402, 405 cannot be distinguished from each other. In the same manner, the third received detection 403 that relates to the first target object 441 and the sixth received detection 406 that relates to the second target object 441 v

Figure 5A-Figure 5C disclose a situation where two separate target objects 140, 141, as indicated in Figure 1 and Figure 2, are detected using the second sequence 242 of radar signal ramps r, the fourth sequence 244 of radar signal ramps r, the sixth sequence 246 of radar signal ramps r and the eighth sequence 248 of radar signal ramps r, where these sequences 242, 244, 246, 248 of radar signal ramps r are transmitted more or less simultaneously.

For all these sequences 242, 244, 246, 248 of radar signal ramps r, the phase increment Δω₁, Δω₂; Δω₃, Δω₄; Δω₅, Δω₆; Δω₇, Δω₈ from one ramp r to the next ramp r has been changed as described above. This will result in a distribution of possible coinciding detections as will follow from the below. The phase shift increment is according to some aspects changed in a pause where no ramps r are transmitted.

In Figure 5A, the first target object 140 that actually is present in Doppler bin 5 is indicated with a dotted line 440, and the corresponding received detections 501, 502, 503, 504 are indicated with solid lines. A first received detection 501, approximately at Doppler bin 9, corresponds to the second sequence 242 of radar signal ramps r, and a second received detection 502, approximately at Doppler bin 22, corresponds to the fourth sequence 244 of radar signal ramps r. Furthermore, a third received detection 503, approximately at Doppler bin 34, corresponds to the sixth sequence 246 of radar signal ramps r, and a fourth received detection 504, approximately at Doppler bin 59, corresponds to the eighth sequence 248 of radar signal ramps r.

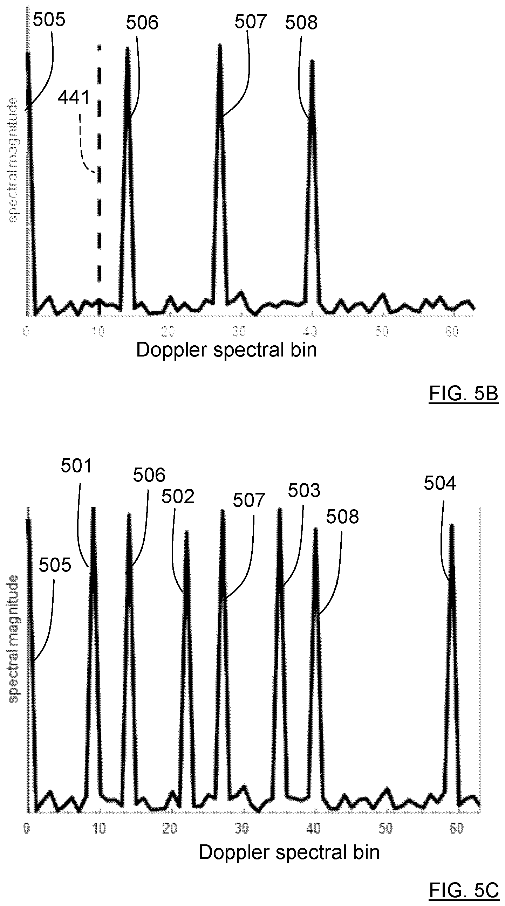

In Figure 5B, a second target object 141 that actually is present in Doppler bin 10 is indicated with a dotted line 441, and the corresponding received detections 505, 506, 507, 508 are indicated with solid lines. A fifth received detection 505, approximately at Doppler bin 0, corresponds to the second sequence 242 of radar signal ramps r, and a sixth received detection 506, approximately at Doppler bin 14, corresponds to the fourth sequence 244 of radar signal ramps r. Furthermore, a seventh received detection 407, approximately at Doppler bin 28, corresponds to the sixth sequence 246 of radar signal ramps r, and an eighth received detection 508, approximately at Doppler bin 40, corresponds to the eighth sequence 248 of radar signal ramps r.

In Figure 5C the resulting received detections 501, 502, 503, 504, 505, 506, 507, 508 for the two target objects 140, 141 are shown for the second sequence 242 of radar signal ramps r, the fourth sequence 244 of radar signal ramps r, the sixth sequence 246 of radar signal ramps r and the eighth sequence 248 of radar signal ramps r. Now, when the phase increments have been changed such that another artificial Doppler modulation is inflicted to each sequence 242, 244, 246, 248 of radar signal ramps r, there are no situations where the detections coincide at the same Doppler bin to such an extent that they cannot be distinguished from each other.

For a next set of sequences of radar signal ramps r, the phase increments can be changed again etc., which means that although situations where detections coincide at the same Doppler bin to such an extent that they cannot be distinguished from each other will occur, but the detections and the coinciding situations will be distributed over time, enabling a more accurate detection of the target objects 140, 141.

AS mentioned above, this technique is especially suited for FDMM, and the target objects 140, 141 can be resolved using well-known FDMM techniques.

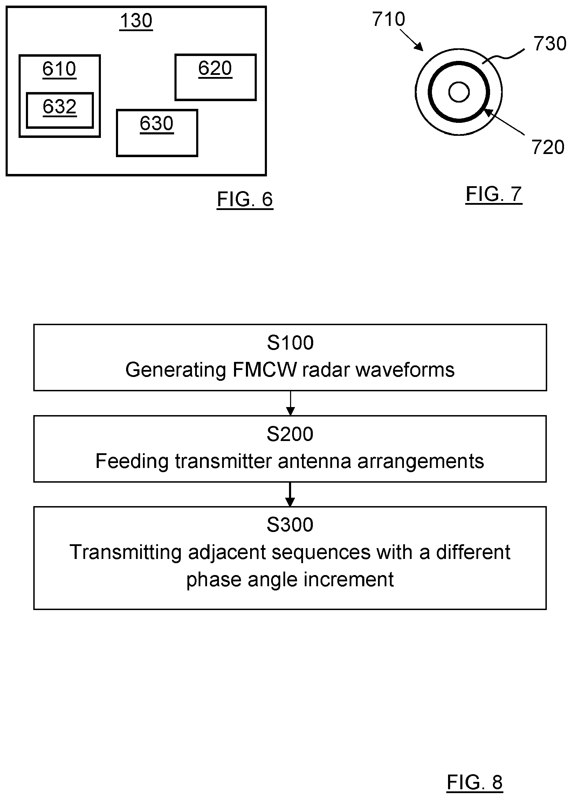

Therefore, according to some aspects, as shown in Figure 6, the control unit 130 comprises a Digital Signal Processor, DSP, arrangement 632 that is adapted to process digital signals input from the receiver unit 212. According to some aspects, the control unit 130 is adapted to distinguish between received signals that are associated with different detected target objects 140, 141 in the Doppler spectrum by finding patterns of signals caused by the artificial Doppler modulation.

This means that well-known FDMM techniques can be applied to resolve the targets objects.

According to some aspects, the transmitter unit 208 comprises a signal generator 209 and a phase shifter 215, where the signal generator 209 is connected to the phase shifter 215 that in turn is connected to the transmitter antenna arrangements 210a, 210b, 210c, 210d, where the phase shifter 215 is a programmable phase shifter 215 that is adapted to modulate an artificial Doppler frequency to the FMCW radar waveforms 204a, 204b, 204c, 204d.

This provides an accurate and easily controllable phase shift.

According to some aspects, the receiver unit 212 is arranged to convert mixed received signals 205 to digital signals.

According to some aspects, the control unit 130 is adapted to control the signal generator 209, the phase shifter 215 and the receiver unit 212. This means that these devices are controlled in an efficient and centralized manner.

The techniques disclosed herein can be used with single antenna systems as well as in system comprising one or more antenna arrays.

By means of the present disclosure, signal occlusions can be distributed over different transmitter antenna arrangements 210a, 210b, 210c, 210d over time such that these occlusions can be minimized.

According to some aspects, the control unit 130 is adapted to control the phase shifter 215 such that each phase shift increment Δω₁, Δω₂; Δω₃, Δω₄; Δω₅, Δω₆; Δω₇, Δω₈ is changed between adjacent transmitted sequences 241, 242; 243, 244; 245, 246; 247, 248 of radar signal ramps r in a stochastic manner. This contributes to distributing the detections over time, enabling a more accurate detection of the target objects 140, 141.

Figure 6 schematically illustrates, in terms of a number of functional units, the components of the control unit 130 according to an embodiment. Processing circuitry 610 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 630. The processing circuitry 610 may further be provided as at least one application specific integrated circuit (ASIC), or field programmable gate array (FPGA).

Particularly, the processing circuitry 610 is configured to cause the control unit 130 to perform a set of operations, or steps. These operations, or steps, were discussed above in connection to the various radar transceivers and methods. For example, the storage medium 630 may store the set of operations, and the processing circuitry 610 may be configured to retrieve the set of operations from the storage medium 630 to cause the control unit 130 to perform the set of operations. The set of operations may be provided as a set of executable instructions. Thus, the processing circuitry 610 is thereby arranged to execute methods and operations as herein disclosed.

The storage medium 630 may also comprise persistent storage, which, for example, can be any single one or combination of magnetic memory, optical memory, solid state memory or even remotely mounted memory.

The control unit 130 may further comprise a communications interface 620 for communications with at least one other unit. As such, the communications interface 620 may comprise one or more transmitters and receivers, comprising analogue and digital components and a suitable number of ports for wired or wireless communication.

The processing circuitry 610 is adapted to control the general operation of the control unit 130 e.g. by sending data and control signals to the external unit and the storage medium 630, by receiving data and reports from the external unit, and by retrieving data and instructions from the storage medium 630. Other components, as well as the related functionality, of the control unit 130 are omitted in order not to obscure the concepts presented herein.

Figure 7 shows a computer program product 710 comprising computer executable instructions 720 arranged on a computer readable medium 730 to execute any of the methods disclosed herein.

With reference to Figure 8, the present disclosure also relates to a method for a vehicle radar system 101. The method comprises generating S100 FMCW, Frequency Modulated Continuous Wave, radar waveforms 204a, 204b, 204c, 204d, where each radar waveform 204a, 204b, 204c, 204d comprises at least two corresponding successive sequences 241, 242; 243, 244; 245, 246; 247, 248 of radar signal ramps r, and feeding S200 each one of at least two transmitter antenna arrangements 210a, 210b, 204c, 204d with a corresponding radar waveform 204a, 204b, 204c, 204d. For each one of the least two transmitter antenna arrangements 210a, 210b, 210c, 210d, the method comprises transmitting S300 adjacent sequences 241, 242; 243, 244; 245, 246; 247, 248 of radar signal ramps r with a different phase shift increment Δω₁, Δω₂; Δω₃, Δω₄; Δω₅, Δω₆; Δω₇, Δω₈ such that an artificial Doppler modulation is inflicted to each sequence 241, 242; 243, 244; 245, 246; 247, 248 of radar signal ramps r.

According to some aspects, the different phase angle increments Δω₁, Δω₂; Δω₃, Δω₄; Δω₅, Δω₆; Δω₇, Δω₈ are accomplished by using a programmable phase shifter 215 that is adapted to modulate an artificial Doppler frequency to the FMCW radar waveforms 204a, 204b, 204c, 204d.

According to some aspects, the method further comprises receiving signals 205 that have been reflected by one or more target objects 140, 141.

According to some aspects, the method further comprises distinguishing between received signals that are associated with different detected target objects 140, 141 in the Doppler spectrum by finding patterns of signals caused by the artificial Doppler modulation.

According to some aspects, the method further comprises applying DDMA, Doppler Division Multiple Access.

The present disclosure also relates to a vehicle 100 comprising the vehicle radar system 101 as described herein.

The present disclosure is not limited to the examples provided, but may vary freely within the scope of the appended claims. There can be any number of transmitter antenna arrangements 210a, 210b, 210c, 210d, but there should be at least two. There can be any number of successive sequences 241, 242; 243, 244; 245, 246; 247, 248 of radar signal ramps r in a radar cycle or radar signal block, but there should be at least two. There may be two or more radar signal blocks in a radar cycle.

In this context, a radar cycle is one observation phase during which the vehicle radar system 101 is arranged to acquire data, process said data on several signal processing levels and to send out available results. This can be a fixed time interval (for example 40 to 60 milliseconds), or it can be a dynamic time interval depending on environment conditions and processing load.

The phase angle increments of simultaneously transmitted FMCW waveforms may be the same and/or vary for different sequences of radar signal ramps.

## Claims

1. A vehicle radar system (101) comprising a control unit (130) and a transceiver unit (110) that in turn comprises a plurality of transmitter antenna arrangements (210a, 210b, 210c, 210d) and a transmitter unit (208) arranged to generate FMCW, Frequency Modulated Continuous Wave, radar waveforms (204a, 204b, 204c, 204d), where each radar waveform (204a, 204b, 204c, 204d) comprises at least two corresponding successive sequences (241, 242; 243, 244; 245, 246; 247, 248) of radar signal ramps (r), and, where the transmitter unit (208) is adapted to feed each one of at least two transmitter antenna arrangements (210a, 210b, 204c, 204d) with a corresponding radar waveform (204a, 204b, 204c, 204d), **characterized in that** for each one of the least two transmitter antenna arrangements (210a, 210b, 210c, 210d), the transmitter unit (208) is adapted to generate adjacent sequences (241, 242; 243, 244; 245, 246; 247, 248) of radar signal ramps (r) with a different phase shift increment (Δω₁, Δω₂; Δω₃, Δω₄; Δω₅, Δω₆; Δω₇, Δω₈) such that an artificial Doppler modulation is inflicted to each sequence (241, 242; 243, 244; 245, 246; 247, 248) of radar signal ramps (r).

2. The vehicle radar system (101) according to claim 1, wherein the transmitter unit (208) comprises a signal generator (209) and a phase shifter (215), where the signal generator (209) is connected to the phase shifter (215) that in turn is connected to the transmitter antenna arrangements (210a, 210b, 210c, 210d), where the phase shifter (215) is a programmable phase shifter (215) that is adapted to modulate an artificial Doppler frequency to the FMCW radar waveforms (204a, 204b, 204c, 204d).

3. The vehicle radar system (101) according to any one of the claims 1 or 2, wherein the transceiver unit (110) further comprises a receiver unit (212) and a plurality of receiver antenna arrangements (213a, 213b, 213c, 213d) that are adapted to receive signals (205) that have been reflected by one or more target objects (140, 141).

4. The vehicle radar system (101) according to claim 3, wherein the control unit (130) comprises a Digital Signal Processor, DSP, arrangement (632) that is adapted to process digital signals input from the receiver unit (212).

5. The vehicle radar system (101) according to claim 4, wherein the control unit (130) is adapted to distinguish between received signals that are associated with different detected target objects (140, 141) in the Doppler spectrum by finding patterns of signals caused by the artificial Doppler modulation.

6. The vehicle radar system (101) according to any one of the claims 3-5, wherein the receiver unit (212) is arranged to convert mixed received signals (205) to digital signals.

7. The vehicle radar system (101) according to any one of the claims 3-6, wherein the control unit (130) is adapted to control the signal generator (209), the phase shifter (215) and the receiver unit (212).

8. The vehicle radar system (101) according to any one of the claims 3-7, wherein the control unit (130) is adapted to control the phase shifter (215) such that each phase shift increment (Δω₁, Δω₂; Δω₃, Δω₄; Δω₅, Δω₆; Δω₇, Δω₈) is changed between adjacent transmitted sequences (241, 242; 243, 244; 245, 246; 247, 248) of radar signal ramps (r) in a stochastic manner.

9. The vehicle radar system (101) according to any one of the previous claims, wherein the vehicle radar system (101) is adapted for DDMA, Doppler Division Multiple Access.

10. A method for a vehicle radar system (101), the method comprising
generating (S100) FMCW, Frequency Modulated Continuous Wave, radar waveforms (204a, 204b, 204c, 204d), where each radar waveform (204a, 204b, 204c, 204d) comprises at least two corresponding successive sequences (241, 242; 243, 244; 245, 246; 247, 248) of radar signal ramps (r); and
feeding (S200) each one of at least two transmitter antenna arrangements (210a, 210b, 204c, 204d) with a corresponding radar waveform (204a, 204b, 204c, 204d); **characterized in that** for each one of the least two transmitter antenna arrangements (210a, 210b, 210c, 210d), the method comprises
transmitting (S300) adjacent sequences (241, 242; 243, 244; 245, 246; 247, 248) of radar signal ramps (r) with a different phase shift increment (Δω₁, Δω₂; Δω₃, Δω₄; Δω₅, Δω₆; Δω₇, Δω₈) such that an artificial Doppler modulation is inflicted to each sequence (241, 242; 243, 244; 245, 246; 247, 248) of radar signal ramps (r).

11. The method according to claim 10, wherein the different phase angle increments (Δω₁, Δω₂; Δω₃, Δω₄; Δω₅, Δω₆; Δω₇, Δω₈) are accomplished by using a programmable phase shifter (215) that is adapted to modulate an artificial Doppler frequency to the FMCW radar waveforms (204a, 204b, 204c, 204d).

12. The method according to any one of the claims 10 or 11, further comprising receiving signals (205) that have been reflected by one or more target objects (140, 141).

13. The method according to claim 12, further comprising distinguishing between received signals that are associated with different detected target objects (140, 141) in the Doppler spectrum by finding patterns of signals caused by the artificial Doppler modulation.

14. The method according to any one of the claims 10-13, further comprising applying DDMA, Doppler Division Multiple Access.

15. A vehicle (100) comprising the vehicle radar system (101) according to any one of the claims 1-9.
